# EUROPÄISCHE PATENTANMELDUNG

(11) **EP 3 640 755 A1**
(43) Veröffentlichungstag der Anmeldung: **22.04.2020**
(21) Anmeldenummer: 19203473.4
(22) Anmeldetag: 16.10.2019
(51) Int. Cl.: G05B 19/418, G08C 17/02

(54) **NACHRÜSTVORRICHTUNG FÜR EIN NACHRÜSTEN EINER SENSORFUNKTONALITÄT BEI EINER PRODUKTIONSMASCHINE**

(30) Priorität: 16.10.2018 DE 102018125661
(71) Anmelder: Mantro GmbH, 81379 München (DE)
(72) Erfinder: Tropper, Manfred, 81739 München (DE); Kramer, Matthias, Dr., 81245 München (DE)
(74) Vertreter: Mathys & Squire

(57) **Zusammenfassung**

Die Erfindung betrifft eine Nachrüstvorrichtung (10) für ein Nachrüsten einer Sensorfunktionalität bei einer Produktionsmaschine (100), aufweisend ein Gehäuse (20) mit einem wenigstens teilweise abgeschlossenen Gehäuseinnenraum (22) und eine Nachrüst-Befestigungsschnittstelle (30) für ein nachträgliches Befestigen des Gehäuses (20) an der Produktionsmaschine (100) in einer Befestigungsposition (BP), weiter aufweisend wenigstens einen Nachrüstsensor (40) zum Aufnehmen wenigstens eines Nachrüstparameters (NP) der Produktionsmaschine (100) in der Befestigungsposition (BP), wobei der wenigstens eine Nachrüstsensor (40) eine Nachrüst-Sensorschnittstelle (42) aufweist für eine Anordnung des wenigstens einen Nachrüstsensors (40) in einer Aufnahmeposition (AP) zur Aufnahme des wenigstens einen Nachrüstparameters (NP), wobei weiter ein Kommunikationsmodul (50) vorgesehen ist für eine Übermittelung des wenigstens einen Nachrüstparameters (NP) an ein separates, vom Gehäuse (20) beabstandetes Empfangsmodul (200).

## Beschreibung

Der Gegenstand der vorliegenden Erfindung betrifft eine Nachrüstvorrichtung für ein Nachrüsten einer Sensorfunktionalität bei einer Produktionsmaschine.

Es ist allgemein bekannt, dass Produktionsmaschinen mit Sensorvorrichtungen ausgestattet sind, um Maschinenparameter der Produktionsmaschine aufzunehmen. Unter einer Produktionsmaschine sind zum Beispiel Fertigungsmaschinen der Verpackungsindustrie, Produktionsmaschinen bei der Produktion von Fahrzeugen oder anderen Gütern sowie ähnliche Maschinen zu verstehen. Jedoch sind auch passive Maschinen, insbesondere Lagervorrichtungen oder Vorratsvorrichtungen im Sinne der vorliegenden Erfindung als Produktionsmaschinen zu verstehen.

Häufig ist es eine Aufgabe, die Sensorik von Produktionsmaschinen zu verbessern, um die kurzzeitige Steuerung und Regelung sowie den nachhaltigen und langzeitorientierten Betrieb der Produktionsmaschinen sicherstellen zu können. Moderne Produktionsmaschinen werden daher mit einer Vielzahl von modernen Sensorvorrichtungen ausgestattet, um neben der kurzfristigen Regelung auch eine langfristige Optimierung der Produktionsmaschine gewährleisten zu können. Darunter fällt zum Beispiel das frühzeitige Erkennen von Defekten der Produktionsmaschine, das geplante Warten bzw. das bedarfsgerechte Warten der Produktionsmaschine sowie die Erkennung von Unregelmäßigkeiten im laufenden Betrieb.

Nachteilhaft bei den bekannten Lösungen ist es, dass ausschließlich moderne und neu hergestellte Produktionsmaschinen die notwendige Sensortechnik aufweisen, um die kurzfristige und langfristige Regelung bzw. Steuerung optimieren zu können. Da jedoch Produktionsmaschinen häufig über sehr lange Zeiträume von 10, 20 oder sogar noch mehr Jahren im Einsatz sind, ist eine Marktdurchdringung von modernen Produktionsmaschinen nur sehr langsam zu erreichen. Während bei neuen Produktionsmaschinen zwar lokal die moderne Regelungstechnik verwendet werden kann, fehlt die Möglichkeit von einer hohen Anzahl von Produktionsmaschinen die entsprechenden Daten zusammenzuführen und auswerten zu können. Eine zentralisierte Auswertungsmöglichkeit für eine hohe Anzahl von Daten von einer großen Anzahl von Produktionsmaschinen ist daher bisher nicht bekannt und auch nicht möglich. Die Umrüstung bestehender Produktionsmaschinen mit modernen Sensorvorrichtungen ist mit einem hohen Aufwand versehen, da die Sensoren entsprechend spezifisch für alte und unterschiedliche Varianten der Produktionsmaschinen angepasst werden müssten. Dies ist aus logistischen und aus wirtschaftlichen Gesichtspunkten nicht sinnvoll.

Es ist Aufgabe der vorliegenden Erfindung, die voranstehend beschriebenen Nachteile zumindest teilweise zu beheben. Insbesondere ist es Aufgabe der vorliegenden Erfindung, in kostengünstiger und einfacher Weise eine hohe Anzahl von Datenerfassungsmöglichkeiten bei einer hohen Anzahl von Produktionsmaschinen schnell im Markt erreichen zu können.

Die voranstehende Aufgabe wird gelöst durch eine Nachrüstvorrichtung mit den Merkmalen des Anspruchs 1. Weitere Merkmale und Details der Erfindung ergeben sich aus den Unteransprüchen, der Beschreibung und den Zeichnungen. Dabei gelten Merkmale und Details, die im Zusammenhang mit dem erfindungsgemäßen Hauptanspruch beschrieben sind, selbstverständlich auch im Zusammenhang mit den erfindungsgemäßen Unteransprüchen und jeweils umgekehrt, sodass bezüglich der Offenbarung zu den einzelnen Erfindungsaspekten stets wechselseitig Bezug genommen wird bzw. werden kann.

Erfindungsgemäß ist eine Nachrüstvorrichtung vorgesehen für ein Nachrüsten einer Sensorfunktionalität bei einer Produktionsmaschine. Eine solche Nachrüstvorrichtung weist ein Gehäuse mit einem wenigstens teilweise abgeschlossenen Gehäuseinnenraum auf. Weiter ist eine Nachrüst-Befestigungsschnittstelle für ein nachträgliches Befestigen des Gehäuses an der Produktionsmaschine in einer Befestigungsposition vorgesehen. Die Nachrüstvorrichtung weist weiter wenigstens einen Nachrüstsensor zum Aufnehmen wenigstens eines Nachrüstparameters der Produktionsmaschine in der Befestigungsposition auf. Dabei weist der wenigstens eine Nachrüstsensor einer Nachrüst-Sensorschnittstelle auf für eine Anordnung des wenigstens einen Nachrüstsensors in eine Aufnahmeposition zur Aufnahme des wenigstens einen Nachrüstparameters. Darüber hinaus ist weiter ein Kommunikationsmodul vorgesehen für eine Übermittlung des wenigstens einen Nachrüstparameters an ein separates, vom Gehäuse beabstandetes Empfangsmodul.

Ein Kerngedanke der vorliegenden Erfindung ist also die Nachrüstmöglichkeit von bestehenden Produktionsmaschinen. Um die Nachrüstfunktionalität zur Verfügung zu stellen, ist erfindungsgemäß die Nachrüstvorrichtung vorgesehen, welche als Nachrüstmodul auch bei bestehenden Produktionsmaschinen eingesetzt werden kann. Um dies zu gewährleisten, ist die Nachrüstvorrichtung mit unterschiedlichen Merkmalen ausgestattet. Zum einen ist die Nachrüstvorrichtung mit mindestens einem Nachrüstsensor ausgestattet. Dieser Nachrüstsensor ist in der Lage, zumindest einen Nachrüstparameter der Produktionsmaschine erkennen zu können. Unter einem Nachrüstparameter im Sinne der vorliegenden Erfindung kann dabei insbesondere ein direkter oder ein indirekter Parameter der Produktionsmaschine verstanden werden. Als direkte Parameter kommen Parameter in Betracht, welche direkt mit der Produktionsmaschine in Verbindung stehen, zum Beispiel eine Geschwindigkeit einer Rotationswalze, eine Temperatur einer Oberfläche oder ähnliches. Als indirekte Parameter können Umweltparameter, wie zum Beispiel die Temperatur neben der Maschine, Gaszusammensetzungen neben der Maschine oder ähnliches verstanden werden. Auch ist es denkbar direkte und indirekte Parameter als Nachrüstparameter miteinander zu kombinieren. Dabei ist es grundsätzlich für die erfindungsgemäße Qualität unerheblich, welchen Nachrüstparameter der Nachrüstsensor erkennen kann. In Abhängigkeit des zu erkennenden Nachrüstparameters wird der entsprechende Nachrüstsensor an die Erkennung eines solchen Nachrüstparameters angepasst sein. Ist beispielsweise die Aufnahme von Vibrationen an einer Stelle der Produktionsmaschine gewünscht, so wird der Nachrüstsensor an dieser Stelle zum Beispiel als Vibrationssensor ausgestaltet sein. Ist es zum Beispiel vorteilhaft, die Temperatur an einer definierten Position der Produktionsmaschine zu erfassen, so wird der Nachrüstsensor dementsprechend einen Temperaturfühler aufweisen. Auch ist es denkbar, dass zur Erfassung von Nachrüstparametern Kamerasysteme bzw. optische Systeme eingesetzt werden können. So ist es selbstverständlich auch denkbar, dass von der Maschine selbst ermittelte Maschinenparameter über ein Kamerasystem ausgelesen und als Nachrüstparameter dem nachgeschalteten Empfangsmodul zur Verfügung gestellt werden können. Dies kann sowohl in direkter Weise in Form eines Nachrüstsensors oder, wie dies später noch erläutert wird, in Form einer Nachrüst-Datenschnittstelle ausgestaltet sein. Bei der voranstehenden Erläuterung handelt es sich nur um Beispiele, welche selbstverständlich auch in einer gemeinsamen Nachrüstvorrichtung miteinander kombiniert werden können. So ist es denkbar, dass auch zwei oder mehr gleiche oder unterschiedliche Nachrüstsensoren eingesetzt werden können.

Um die Nachrüstfunktionalität nicht nur für die Erkennung und Aufnahme wenigstens eines Nachrüstparameters zur Verfügung stellen zu können, sondern darüber hinaus auch noch die Anordnung in der gewünschten Position gewährleisten zu können, ist die Nachrüstvorrichtung, insbesondere das Gehäuse der Nachrüstvorrichtung, mit einer Nachrüst-Befestigungsschnittstelle ausgestattet. Ein solches Gehäuse dient auch dem Schutz gegen unerwünschte oder versehentliche Manipulation der Nachrüstvorrichtung und/oder des Nachrüstsensors. Diese Nachrüst-Befestigungsschnittstelle kann sowohl in spezifischer Weise auf eine Produktionsmaschine bzw. eine spezifische Befestigungsposition an einer spezifischen Produktionsmaschine ausgelegt sein. Jedoch ist es auch denkbar, dass es sich bei der Nachrüst-Befestigungsschnittstelle um eine universelle Befestigungsschnittstelle handelt, welche an einer Vielzahl unterschiedlicher Befestigungspositionen und/oder an einer Vielzahl unterschiedlicher Produktionsmaschinen angeordnet werden kann. Als Befestigungsfunktionalitäten können dabei sowohl reversible als auch irreversible Befestigungen eingesetzt werden. Ein Beispiel für eine reversible universelle Befestigung ist zum Beispiel die Befestigung mithilfe eines Magneten. Jedoch sind auch Schraubverbindungen, Klemmverbindungen, reibschlüssige Verbindungen, Formschlussverbindungen, Klebeverbindungen oder Ähnliches einzeln sowie in kombinierter Weise im Sinne der vorliegenden Erfindung denkbar.

Erfindungsgemäß kann also die Nachrüstvorrichtung nun in der Befestigungsposition mithilfe der Nachrüst-Befestigungsschnittstelle an der Produktionsmaschine angeordnet werden. Mithilfe der Nachrüst-Sensorschnittstelle ist es nun möglich, den Nachrüstsensor auch für die Aufnahme des Nachrüstparameters auszugestalten. Ist beispielsweise eine optische Aufnahme, zum Beispiel das Aufnehmen einer Monitordarstellung von der Produktionsmaschine, als Nachrüstparameter gewünscht, so ist die Nachrüst-Sensorschnittstelle als optische Schnittstelle in Form der Kamera als Nachrüstsensor ausgebildet. Ist beispielsweise eine Aufnahme einer Kontakttemperatur an der Produktionsmaschine gewünscht, so wird der Nachrüstsensor in Form eines Temperaturfühlers mit einer Nachrüst-Sensorschnittstelle in Form einer Kontaktierung der Außenseite der Produktionsmaschine ausgestaltet sein. Auch hier ist nochmals zu erkennen, dass auch die Nachrüst-Sensorschnittstelle spezifisch auf den Einsatzzweck des jeweiligen Nachrüstsensors und unspezifisch auf die jeweilige Produktionsmaschine ausgestaltet ist bzw. ausgestaltet sein kann.

Sobald nun in einer Nachrüstfunktionalität eine Produktionsmaschine mit der Möglichkeit ausgestattet worden ist, in der Befestigungsposition mit der Nachrüstvorrichtung wenigstens einen Nachrüstparameter mit dem Nachrüstsensor zu erkennen, kann auch eine Weiterversendung bzw. Auswertung dieser Nachrüstparameter stattfinden. Um eine Weiterleitung zur Verfügung stellen zu können, ist die Nachrüstvorrichtung mit einem Kommunikationsmodul ausgestattet. Dieses Kommunikationsmodul ist vorzugsweise nicht auf eine Auswertung ausgerichtet, sondern ausschließlich auf ein Weiterleiten bzw. Weiterkommunizieren der erfassten Nachrüstparameter an ein separates Empfangsmodul. Dieses Empfangsmodul kann sowohl ein lokales Empfangsmodul, zum Beispiel als Empfangsmodul innerhalb einer Maschinenhalle, in welcher die Produktionsmaschine steht, sein, als auch ein zentrales Empfangsmodul, welches sich in einem übergeordneten Netzwerk befindet. Auch kann ein Zwischenempfangsmodul vorgesehen sein, sodass zum Beispiel in Form von einem Funkrouter das Empfangsmodul zentral in einer Maschinenhalle die Daten von ein oder auch deutlich mehr Nachrüstvorrichtungen bzw. ein oder mehr Produktionsmaschinen empfängt. Nachgeordnet diesem zentralen Empfangsmodul kann ein Anschluss an eine kabelgebundene oder anderweitig weitergeordnete Netzwerkstruktur sein, sodass zum Beispiel die Weiterleitung und Datensammlung in einem zentralen Empfangsmodul, in einem Cloudsystem bzw. im Internet möglich wird.

Ausgehend von der voranstehenden Erläuterung wird nun ersichtlich, dass in einfacher und vor allem kostengünstiger sowie leicht umzusetzender Weise eine Möglichkeit gegeben wird, auch bei bestehenden Produktionsmaschinen eine Datenauswertung in zentralisierter Weise zur Verfügung zu stellen. Auch Produktionsmaschinen mit einem hohen Einsatzalter von 10, 20 oder noch mehr Jahren, können nun mit einer Nachrüstfunktionalität mit einer oder mehreren erfindungsgemäßen Nachrüstvorrichtungen ausgestattet werden. Diese sind zum einen in der Lage, an der Produktionsmaschine befestigt zu werden und dort auch Nachrüstparameter aufzunehmen, zum anderen aber zusätzlich in der Lage, diese Daten nicht nur lokal zu verwenden, sondern über das Kommunikationsmodul an ein zentrales Empfangsmodul zur Auswertung weiterzuleiten. Dies erlaubt es, in kostengünstiger und einfacher Weise, eine schnelle Marktdurchdringung zu erzielen, sodass eine Vielzahl von Produktionsmaschinen einfach und kostengünstig mit dieser Nachrüstfunktionalität ausgestattet werden kann. Die hohe Anzahl von Produktionsmaschinen, die auf diese Weise schnell erreicht werden können, führt dazu, dass auch in hoher Geschwindigkeit ein großer Datensatz bei einem zentralen Empfangsmodul bzw. bei einer zentralen Auswerteeinheit aufgebaut werden kann. Dies alles kann erreicht werden durch den Weiterbetrieb bereits bestehender und im Einsatz befindlicher Produktionsmaschinen. Selbstverständlich können die bestehenden Produktionsmaschinen auch durch moderne Produktionsmaschinen ergänzt werden, welche die Sensorfunktionalität bereits mit eingebaut haben.

Es kann von Vorteil sein, wenn eine erfindungsgemäße Nachrüstvorrichtung derart ausgestaltet ist, dass der wenigstens eine Nachrüstsensor für die Erfassung wenigstens eines der folgenden Nachrüstparameter ausgebildet ist:
- Umgebungsparameter
- Kontakttemperatur
- Vibrationsfrequenz
- Umgebungsdruck
- Luftfeuchtigkeit
- akustische Signale
- optische Signale

Bei der voranstehenden Aufzählung handelt es sich um eine nicht abschließende Liste. Unter der Erkennung der Umgebungstemperatur oder einer Kontakttemperatur ist insbesondere die Verwendung eines Temperaturfühlers als Nachrüstsensor zu verstehen. Mithilfe von akustischen Sensoren oder direkter Kontaktierung können Vibrationsfrequenzen aufgenommen werden. Auch die Lautstärke, die Frequenz oder andere akustische Signale können auf diese Weise mit dem Nachrüstsensor ausgewertet werden. Selbstverständlich können auch einfache Sensoren kombiniert werden oder Mehrfachsensoren zwei oder mehr Nachrüstparameter gleichzeitig aufnehmen. Optische Signale werden insbesondere in Form von Farben, Helligkeiten, Bildern, Videos oder auch in Form von Thermobildern aufnehmbar. Je nachdem, welche Funktionalität mit der Nachrüstvorrichtung tatsächlich umgesetzt werden soll, sind dementsprechend ein oder mehrere Nachrüstsensoren auf diese spezifische Funktionalität technisch ausgerichtet und angepasst. Die Nachrüstvorrichtung ist also spezifisch für die gewünschten Nachrüstparameter und unspezifisch für die entsprechende Produktionsmaschine.

Ein weiterer Vorteil ist erzielbar, wenn bei einer erfindungsgemäßen Nachrüstvorrichtung der wenigstens eine Nachrüstsensor im Gehäuseinnenraum oder zumindest teilweise im Gehäuseinnenraum angeordnet ist. Der Gehäuseinnenraum ist dabei vorzugsweise dicht hinsichtlich Flüssigkeit und/der Staub und/oder Gasen gegen die Umgebung ausgebildet. Dies erlaubt es, einen zusätzlichen Schutz für den angeordneten wenigstens einen Nachrüstsensor zur Verfügung zu stellen. Hinsichtlich der Lieferung, der Montage und des Betriebs bringt dies große Vorteile mit sich, insbesondere dann, wenn sensible Nachrüstsensoren eingesetzt werden sollen. Nicht zuletzt wird auf diese Weise eine kompakte Bauform erreicht, wodurch die Komplexität der einzelnen Bauteile in Form der Nachrüstsensoren von außen an der Nachrüstvorrichtung nicht erkennbar bzw. nicht einsehbar ist.

Vorteilhaft ist es ebenfalls, wenn bei einer erfindungsgemäßen Nachrüstvorrichtung das Kommunikationsmodul ausgebildet ist für eine Übermittlung per Funkübertragung, insbesondere an ein in einem Funknetz angeordnetes Empfangsmodul. Das bedeutet, dass insbesondere kabelungebunden bzw. kabelfrei die Kommunikation entlang einer Kommunikationsverbindung zum Empfangsmodul laufen kann. Die Anordnung des Empfangsmoduls kann sowohl zentral in einer Maschinenhalle der Produktionsmaschine, als auch übergeordnet in Form einer Cloudfunktionalität als Empfangsmodul gewährleistet werden. So sind als Funkstandards zum Beispiel WLAN, Bluetooth oder aber auch ein Mobilfunksystem denkbar. Wird ein Mobilfunksystem verwendet, so ist vorzugsweise das Kommunikationsmodul mit einer entsprechenden SIM-Karte bzw. SIM-Funktionalität zur Anmeldung in dem Mobilfunknetz ausgestattet.

Weitere Vorteile sind erzielbar, wenn bei einer erfindungsgemäßen Nachrüstvorrichtung das Kommunikationsmodul für eine bidirektionale Kommunikation, insbesondere mit Kommunikationsmodulen anderer Nachrüstvorrichtungen ausgebildet ist. Eine bidirektionale Kommunikation erlaubt es also nicht nur Daten vom Kommunikationsmodul, also von der Nachrüstvorrichtung, zu versenden, sondern auch dort zu empfangen. Dies zielt insbesondere darauf ab, dass zum Beispiel Kalibrierschritte nun zentral von dem Empfangsmodul oder einem übergeordneten Cloudsystem angeordnet bzw. ausgeführt werden. Die einzelnen Nachrüstvorrichtungen sind durch die Empfangsmöglichkeit am Kommunikationsmodul damit sozusagen wartungsfrei bzw. kalibrierungsfrei ausgestaltet. Bei großen Anlagensystemen bzw. weitläufig verteilten Produktionsmaschinen kann auf diese Weise auch ein dezentrales Netzwerk, ein sogenanntes Mesh, ausgebildet werden. Dies wird dadurch gewährleistet, dass durch die bidirektionale Kommunikationsfunktionalität auch benachbarte Nachrüstvorrichtungen mit ihren Kommunikationsmodulen untereinander kommunizieren können. Auf diese Weise lässt sich ein Netzwerk bzw. eine Kaskade ausbilden, dass zum Beispiel eine weit entfernte Nachrüstvorrichtung die erfassten Nachrüstparameter an das Kommunikationsmodul einer näher an dem zentralen Empfangsmodul angeordneten Nachrüstvorrichtung sendet. Von dieser näheren Nachrüstvorrichtung werden nun die empfangenen Nachrüstparameter zusammen mit den selbst gemessenen Nachrüstparametern kombiniert und an das zentrale Empfangsmodul weitergeleitet. Dies erlaubt es in einfacher und kostengünstiger Weise auch in komplexen Kommunikationssituationen, insbesondere in weitläufigen Nutzungsgebieten die erfindungsgemäßen Vorteile zu ermöglichen.

Vorteilhaft ist es darüber hinaus, wenn bei einer erfindungsgemäßen Nachrüstvorrichtung eine Nachrüst-Datenschnittstelle für einen bidirektionalen Empfang von Maschinenparametern der Produktionsmaschine vorgesehen ist. Neben der Möglichkeit, eigene Nachrüstparameter zu erfassen, ist es auch denkbar, Maschinenparameter direkt von Produktionsmaschine selbst zu erfassen. Auch alte Produktionsmaschinen sind üblicherweise für die eigene Regelung oder Steuerung mit eigenen Sensoren bzw. sogenannten Maschinensensoren ausgestattet. Die erfassten Maschinenparameter von diesen Maschinensensoren werden jedoch maschinenintern in der Produktionsmaschine verwendet. Nun ist es möglich, dass über eine Nachrüst-Datenschnittstelle diese Maschinenparametern aus der Produktionsmaschine ausgelesen und zusätzlich zu den Nachrüstparametern ebenfalls in der Nachrüstvorrichtung dem übergeordneten Auswertesystem in einem Cloudsystem zur Verfügung gestellt werden. Dies kann zum Beispiel mithilfe einer Kameravorrichtung als Nachrüstsensor ausgebildet werden, welcher als Nachrüst-Datenschnittstelle einen Datenmonitor der Produktionsmaschine aufnehmen und erfassen kann. Jedoch sind auch rein datengebundene Schnittstellen, zum Beispiel Steckkontakte, optische Kommunikationen oder Ähnliches im Sinne der vorliegenden Erfindung denkbar, um zusätzlich auch Maschinenparameter zu erfassen und zentral zur Verfügung stellen zu können.

Ebenfalls von Vorteil ist es, wenn bei einer erfindungsgemäßen Nachrüstvorrichtung die Nachrüst-Befestigungsschnittstelle für ein werkzeugfreies Befestigen der Produktionsmaschine ausgebildet ist. Dies kann zum Beispiel durch die Verwendung von Magnetsystemen zur Verfügung gestellt werden. Auch die Verwendung von Formschluss, Klebemittel oder Ähnlichem ist hier denkbar. Bevorzugt ist das werkzeugfreie Befestigen in reversibler Weise ausgebildet. Eine werkzeugfreie Befestigung ist insbesondere auch als werkzeugarme Befestigung zu verstehen, also unter der Verwendung von Standardwerkzeugen wie einem Schraubendreher, einem Hammer oder einem Nietwerkzeug. Bevorzugt ist jedoch eine vollständig werkzeugfreie Ausgestaltung vorgesehen. Bei einer solchen Ausführungsform ist darüber hinaus auch die Arbeitssicherheit bei der Montage verbessert.

Weitere Vorteile bringt es mit sich, wenn bei einer erfindungsgemäßen Nachrüstvorrichtung ein Zwischenspeicher vorgesehen ist für eine Zwischenspeicherung der aufgenommenen Nachrüstparameter für ein anschließendes Übermitteln an das Empfangsmodul. Insbesondere, wenn eine Übermittlung über die Kommunikationsverbindung mit einem Funkstandard erfolgen soll, kann dieser Funkstandard hinsichtlich der Qualität und der Signalstärke Schwankungen unterliegen. Um dies ausgleichen zu können, kann es Vorteile mit sich bringen, wenn die erfassten Nachrüstparameter in diesem Zwischenspeicher aufgenommen und solange zwischengespeichert werden, bis eine Übermittlung zum Empfangsmodul wieder in ausreichender Qualität und mit ausreichender Signalstärke möglich ist. Auch bei vollständig fehlendem Kontakt zwischendurch kann auf diese Weise sichergestellt werden, dass die Nachrüstparameter zuverlässig das Empfangsmodul erreichen. Der Zwischenspeicher ist insbesondere dann von Vorteil, wenn es relevant ist, den Strombedarf der Nachrüstvorrichtung minimal zu halten, also die Sendefunktion nur temporär einzuschalten. Auch bei mobilen Produktionsmaschinen, also zum Beispiel bei Baumaschinen, welche im mobilen Einsatz sind, kann eine solche Zwischenspeicherung Vorteile mit sich bringen, um einem unerwünschten Datenverlust während einer Unterbrechung der Kommunikationsverbindung zu vermeiden.

Ebenfalls von Vorteil ist es, wenn bei einer erfindungsgemäßen Nachrüstvorrichtung eine Batterievorrichtung vorgesehen ist für eine Versorgung des wenigstens einen Nachrüstsensors und/oder des Kommunikationsmoduls mit elektrischer Energie. Eine Batterievorrichtung ist insbesondere eine austauschbare Batterievorrichtung. Selbstverständlich können jedoch auch andere Energiespeichervorrichtungen, zum Beispiel Kondensatoren oder Ähnliches, eingesetzt werden. Die Batterievorrichtung kann dabei zusätzlich eine Auflademöglichkeit in Form einer außenstehenden, am Gehäuse angeordneten Kontaktierung oder in Form von Solarmodulen aufweisen. Eine Batterievorrichtung erlaubt es, eine vollständig losgelöste eigenständige Montage und Betriebsweise der Nachrüstvorrichtung und insbesondere des Nachrüstsensors und des Kommunikationsmoduls zur Verfügung stellen zu können.

Ebenfalls von Vorteil kann es sein, wenn bei einer erfindungsgemäßen Nachrüstvorrichtung der wenigstens eine Nachrüstsensor und/oder das wenigstens eine Kommunikationsmodul auswertefrei ausgebildet sind. Mit anderen Worten vermeidet man auf diese Weise einen zu hohen Grad an Komplexität und Intelligenz innerhalb der Nachrüstvorrichtung. Eine aufwendige und kostenintensive Recheneinheit für die Zwischenauswertung oder Auswertung der erfassten Nachrüstparameter kann unterlassen werden. Dies führt zu deutlich kostengünstigeren und einfacheren Nachrüstvorrichtungen, da hier Geld und Bauraum eingespart werden können. Gleichzeitig wird die Auswertungsmöglichkeit durch die Kommunikationsfähigkeit der Nachrüstvorrichtung in ein übergeordnetes Cloudsystem gelegt, welches in Kommunikationsverbindung die Nachrüstparameter zwischen dem Kommunikationsmodul und dem Empfangsmodul austauschen kann.

Ebenfalls von Vorteil ist es, wenn bei einer erfindungsgemäßen Nachrüstvorrichtung eine Auswerteeinheit vorgesehen ist für eine Auswertung und/oder eine Teilauswertung der aufgenommenen Nachrüstparameter. Insbesondere wenn komplexe Nachrüstparameter vorgesehen sind, kann eine Teilauswertung, zum Beispiel das Zusammenfassen unterschiedlicher Nachrüstparameter in einer gemeinsamen Kennzahl, Vorteile mit sich bringen. Die Auswerteeinheit ist jedoch vorzugsweise klein, leicht und kostengünstig ausgebildet, um die Kompaktheit der Nachrüstvorrichtung so wenig wie möglich zu beeinträchtigen.

Ein weiterer Gegenstand der vorliegenden Erfindung ist ein Verfahren für ein nachträgliches Ausstatten einer Produktionsmaschine mit einer Sensorfunktionalität, aufweisend die folgenden Schritte:
- Befestigen einer Nachrüstvorrichtung in einer Befestigungsposition an der Produktionsmaschine mittels einer Nachrüst-Befestigungsschnittstelle,
- Anordnen des Nachrüstsensors der Nachrüstvorrichtung in einer Aufnahmeposition zur Aufnahme wenigstens eines Nachrüstparameters der Produktionsmaschine mittels einer Nachrüst-Sensorschnittstelle,
- Ausbilden einer Kommunikationsverbindung zwischen einem Kommunikationsmodul der Nachrüstvorrichtung und einem von der Nachrüstvorrichtung separaten Empfangsmodul.

Bei einem erfindungsgemäßen Verfahren kann eine Sensorfunktionalität nachträglich auf eine Produktionsmaschine aufgesetzt werden. Diese Nachrüstung erfolgt in einfachen, kostengünstigen und vor allem schnell durchführbaren Schritten auch für bestehende Anlagen mit bestehenden Produktionsmaschinen. Mit anderen Worten wird durch ein erfindungsgemäßes Verfahren in Nachrüstweise ein neues Netzwerk aufgebaut bzw. ein bestehendes Netzwerk, insbesondere ein Funknetzwerk, erweitert. Die Kommunikationsverbindung zwischen dem Kommunikationsmodul und dem separaten Empfangsmodul kann sowohl in bidirektionaler Reise als auch in unidirektionaler Weise ausgebildet sein.

Vorteile bringt es ebenfalls mit sich, wenn bei einem erfindungsgemäßen Verfahren nach dem Ausbilden der Kommunikationsverbindung wenigstens ein Kalibrierschritt für die Nachrüstvorrichtung, insbesondere zur Kalibrierung des wenigstens einen Nachrüstsensors durchgeführt wird. Eine Kalibrierung kann zum Beispiel für einen oder mehrere Nachrüstsensoren dahingehend vonstattengehen, dass eine Basistemperatur gesetzt, eine Grundlage für Vibrationsfrequenzen definiert oder eine Bildschärfe für einen optischen Nachrüstsensor eingestellt wird. Auch die Kombination von unterschiedlichen Kalibrierschritten ist dabei vorteilhaft. Insbesondere wird für die Kalibrierung eine bidirektionale Kommunikation durchgeführt, so dass also Daten in Form von Nachrüstparametern erfasst und über die Kommunikationsverbindung an das Empfangsmodul weitergeleitet werden. Nach einer Auswertung in Form von einem ersten Kalibrierverfahren kann nun eine Rückmeldung mit Kalibrierdaten über die Kommunikationsverbindung an das Kommunikationsmodul gesendet werden. Eine dezentrale Kalibrierung an der jeweiligen Nachrüstvorrichtung ist nicht mehr notwendig. Vielmehr kann sozusagen im Sinne einer "Plug-and-Play"-Funktionalität die Nachrüstvorrichtung einfach, schnell und kostengünstig an der Produktionsmaschine platziert werden, während die nachträgliche Kontaktierung und Kalibrierung automatisch oder zumindest teilautomatisch durchgeführt werden kann.

Vorteile bringt es weiter mit sich, wenn bei einem erfindungsgemäßen Verfahren bei und/oder nach dem Ausbilden der Kommunikationsverbindung eine Identifikation der Nachrüstvorrichtung an das Empfangsmodul übermittelt wird. Diese Identifikation kann zum Beispiel Details über die technischen Möglichkeiten der Nachrüstsensoren aufweisen oder aber Informationen über die Position, die Art der Produktionsmaschine oder die tatsächliche Ausbildung der Befestigungspositionen. Die Identifikation ist dabei insbesondere als Identifikationsnummer ausgestaltet und kann spezifisch für die jeweilige Nachrüstvorrichtung sein. Das Übermitteln der Identifikation kann zum Beispiel durch manuelles Eingeben oder durch das Abscannen einer solchen Nummer, welche insbesondere in Form eines Barcodes oder anderweitig maschinenlesbar an der Nachrüstvorrichtung angeordnet ist, erfolgen. Auch eine automatische oder teilautomatische Übermittlung einer solchen Identifikation ist im Sinne der vorliegenden Erfindung denkbar.

Weitere Vorteile bringt es mit sich, wenn bei einem erfindungsgemäßen Verfahren nach der Ausbildung der Kommunikationsverbindung eine Erkennung der Produktionsmaschine anhand des aufgenommenen wenigstens einen Nachrüstparameters durchgeführt wird. Somit ist es möglich, nicht nur eine Kalibrierung der Nachrüstsensoren am Ort der Nachrüstvorrichtung, sondern auch eine Kalibrierung in der Auswertungsmöglichkeit der Nachrüstparameter gewährleisten zu können. Da die Nachrüstvorrichtungen vorzugsweise möglichst universell auch bei unterschiedlichen Produktionsmaschinen einsetzbar sind, kann auf diese Weise in der Auswerteeinheit für eine sehr große Anzahl von Produktionsmaschinen automatisch eine Erkennung und Anpassung an die jeweils vorhandene Produktionsmaschine hinsichtlich der Herkunftsdaten der Nachrüstparameter zur Verfügung gestellt werden. So kann zum Beispiel aus einer über einen Zeitraum aufgenommenen kontinuierlichen Datenmenge an Nachrüstparametern oder aus der Kombination unterschiedlicher Nachrüstparameter unterschiedlicher Nachrüstsensoren einer oder mehrerer Nachrüstvorrichtungen an einer Produktionsmaschine ein Datenfingerprint erstellt werden, welcher mit entsprechenden Datenfingerprints in einer Datenbank verglichen wird. Auf diese Weise kann sozusagen eine spezifische Kalibrierung und damit eine Anpassung auf eine spezifische Produktionsmaschine erfolgen. Neben einer manuellen Eingabe in eine Datenbank bzw. einem manuellen oder teilautomatischen Aufbau einer solchen Datenbank ist auch ein Anlernen mit weiteren neuen Produktionsmaschinen in einer solchen Datenbank möglich. Insbesondere können erfasste und sich entwickelnde Nachrüstparameter in die Datenbank zurückgespiegelt werden, um insbesondere die Qualität und die Sicherheit in der Erkennung der Produktionsmaschine weiter zu verbessern und somit die dezentrale Kalibrierungsfähigkeit weiter zu optimieren.

Ebenfalls von Vorteil ist es, wenn bei einem erfindungsgemäßen Verfahren zumindest zwei Nachrüstvorrichtungen an unterschiedlichen Befestigungspositionen der Produktionsmaschine befestigt werden. Damit können auch unterschiedliche oder auch gleiche Nachrüstsensoren an unterschiedlichen Befestigungspositionen angeordnet werden. Die Befestigungsposition kann also als Ortsinformation zusätzlich über das Kommunikationsmodul an das Empfangsmodul übermittelt werden. Auch eine Kommunikation unter den Nachrüstvorrichtungen ist dabei in Form der später noch erläuterten Zwischen-Kommunikationsverbindung möglich. Die Kalibrierung erfolgt dabei nicht nur hinsichtlich der einzelnen Nachrüstsensoren, sondern auch hinsichtlich der tatsächlichen Befestigungsposition der einzelnen Nachrüstvorrichtungen.

Bei einem Verfahren gemäß dem voranstehenden Absatz bringt es Vorteile mit sich, wenn wenigstens eine Zwischen-Kommunikationsverbindung zwischen den beiden Nachrüstvorrichtungen ausgebildet wird. Die Zwischen-Kommunikationsverbindung kann unidirektional oder vorzugsweise bidirektional ausgebildet werden. Somit ist das Ausbilden eines sogenannten Meshnetzwerkes denkbar, um Nachrüstparameter von der ersten Nachrüstvorrichtung über die Zwischen-Kommunikationsverbindung an die zweite Nachrüstvorrichtung weiterzuleiten. Die zweite Nachrüstvorrichtung nimmt nun die selbst erfassten Nachfristparameter und kombiniert diese mit den empfangenen Nachrüstparametern der ersten Nachrüstvorrichtung. Die kombinierten Nachrüstparameter können nun wie in einer Kaskade entweder an eine dritte Nachrüstvorrichtung weitergeleitet oder aber direkt an das zentrale Empfangsmodul übersendet werden. Damit lassen sich auch unübersichtliche, komplexe und weitläufige Anlagen in erfindungsgemäßer Weise nachträglich mit der Kommunikationsfähigkeit und der Nachrüstfunktionalität ausstatten.

Ein weiterer Vorteil ist es, wenn bei einem erfindungsgemäßen Verfahren die Kommunikationsverbindung verschlüsselt und/oder privatisiert und/oder anonymisiert aufgebaut wird. Eine solche Verschlüsselung ist insbesondere mit einer Signatur der Daten innerhalb der Kommunikationsverbindung kombiniert. Somit wird sichergestellt, dass nicht nur der Dateninhalt, sondern auch deren Herkunft eindeutig zuordenbar ist. Die Herkunft kann dabei spezifisch auf die Nachrüstvorrichtung und/oder auf die Produktionsmaschine sein. Es kann auch eine Übermittlung der spezifischen Daten erfolgen ohne die Produktionsmaschine zu spezifizieren. Zum Beispiel ist ein VPN-Netzwerk denkbar, um solche Funktionalitäten zu erreichen. Auch eine Verschlüsselung in der Nachrüstvorrichtung und eine Entschlüsselung im Empfangsmodul sind im Sinne der vorliegenden Erfindung denkbar. Ein unerwünschtes Auslesen bzw. ein unerwünschtes Verwechseln in einem übergeordneten Cloudsystem des Empfangsmoduls ist auf diese Weise im Wesentlichen vollständig ausgeschlossen. Durch diese Form des Datenschutzes wird es möglich, für unterschiedliche Betreiber von unterschiedlichen Produktionsmaschinen eine gemeinsame zentrale Kommunikationsmöglichkeit mit einem gemeinsamen zentralen Kommunikationsmodul in einem gemeinsamen übergeordneten Cloudsystem gewährleisten zu können.

Weitere Vorteile bringt es mit sich, wenn bei einem erfindungsgemäßen Verfahren in dem Empfangsmodul ein zentrales Auswertemodul angeordnet ist für eine zentrale Auswertung der empfangenen Nachrüstparameter. Diese zentrale Auswertung erhöht ebenfalls den Datenschutz und die Sicherheit, da das Abfangen der Daten aus der Kommunikationsverbindung keinerlei Hinweise auf die Produktionsmaschine oder die Interpretation dieser Nachrüstparameter ermöglicht. Auch wird in der Nachrüstvorrichtung die benötigte Rechenleistung minimiert oder sogar auf null gesetzt, sodass auf eine dezentrale Recheneinheit in der Nachrüstvorrichtung verzichtet werden kann. Die Auswertung kann dabei im zentralen Auswertemodul zum Beispiel hinsichtlich des aktuellen Verschleißstatus, einer geplanten und verbrauchsoptimierten Wartung oder hinsichtlich einer generellen Überwachung der Produktionsmaschine ausgeführt sein. Selbstverständlich können auch übergeordnete Auswertungen für eine Vielzahl gleicher oder ähnlicher Produktionsmaschinen innerhalb des zentralen Auswertemoduls durchgeführt werden.

Ebenfalls von Vorteil kann es sein, wenn bei einem erfindungsgemäßen Verfahren über eine Nachrüst-Datenschnittstelle Maschinenparameter der Produktionsmaschine von der Nachrüstvorrichtung an das Empfangsmodul übermittelt werden. Solche Maschinenparameter stammen von Sensoren, welche bereits in der Produktionsmaschine vorhanden sind. Auch bereits im Einsatz befindliche ältere Produktionsmaschinen mit 10, 20 oder mehr Betriebsjahren weisen dementsprechend bereits Sensorfunktionalitäten auf, um für die lokale Regelung und/oder Steuerung der Produktionsmaschinen entsprechende Daten zur Verfügung zu haben. Über eine solche Nachrüst-Datenschnittstelle kann in optischer, datenübertragender oder in steckverbindender Weise nun ein Auslesen dieser Maschinenparametern durch die Nachrüstvorrichtung erfolgen. Diese Maschinenparameter werden nun zusätzlich zu den Nachrüstparametern oder in Form von Nachrüstparametern an das zentrale Auswertemodul bzw. das Empfangsmodul übermittelt.

Die Maschinenparameter gemäß dem voranstehenden Absatz sind vorzugsweise mit einer Maschinenidentifikation der Produktionsmaschine ausgestattet. So kann zum Beispiel ein Header solcher Datenübermittlungen Informationen über eine Maschinen-ID aufweisen, um die Art, die Ausbildung oder die geografische Anordnung der Produktionsmaschine dem Empfangsmodul eineindeutig und spezifisch mitteilen zu können. Diese Information kann zum Beispiel für die dezentrale Kalibrierung der Nachrüstsensoren in den angeordneten Nachrüstvorrichtungen und/oder für die zentrale Kalibrierung bei der Auswertung der empfangenen Nachrüstparameter später verwendet werden.

Weitere Vorteile, Merkmale und Einzelheiten der Erfindung ergeben sich aus der nachfolgenden Beschreibung, in der unter Bezugnahme auf die Zeichnungen Ausführungsbeispiele der Erfindung im Einzelnen beschrieben sind. Dabei können die in den Ansprüchen und in der Beschreibung erwähnten Merkmale jeweils einzeln für sich oder in beliebigen Kombinationen erfindungswesentlich sein. Es zeigen schematisch:
- Figur 1: eine erste Ausführungsform einer erfindungsgemäßen Nachrüstvorrichtung,
- Figur 2: eine weitere Ausführungsform einer erfindungsgemäßen Nachrüstvorrichtung,
- Figur 3: eine weitere Ausführungsform einer erfindungsgemäßen Nachrüstvorrichtung,
- Figur 4: eine weitere Ausführungsform einer erfindungsgemäßen Nachrüstvorrichtung,
- Figur 5: ein erster Schritt eines erfindungsgemäßen Verfahrens,
- Figur 6: ein weiterer Schritt eines erfindungsgemäßen Verfahrens,
- Figur 7: ein weiterer Schritt eines erfindungsgemäßen Verfahrens,
- Figur 8: ein weiterer Schritt eines erfindungsgemäßen Verfahrens und
- Figur 9: ein weiterer Schritt eines erfindungsgemäßen Verfahrens.

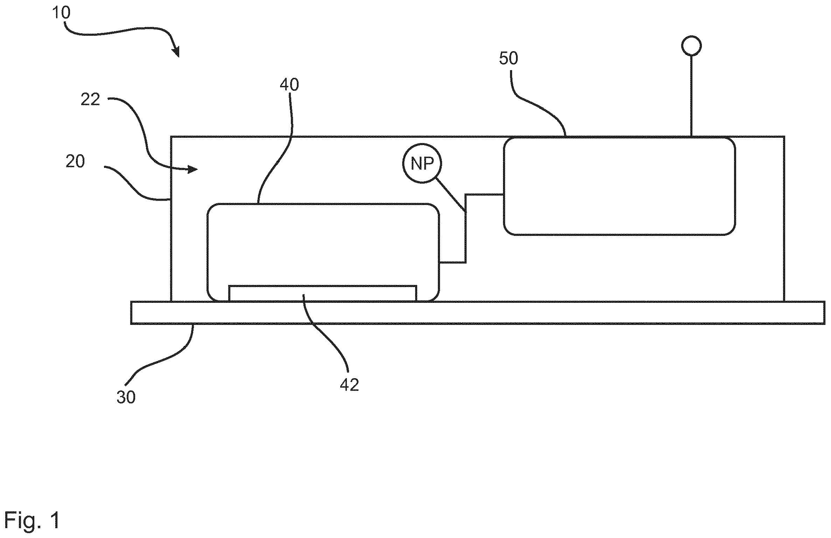

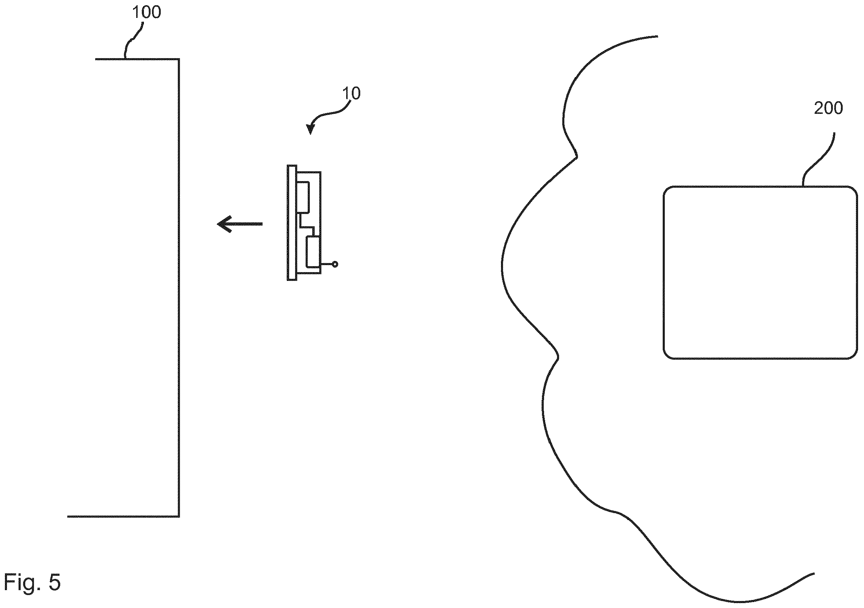

Die Figuren 1 bis 4 zeigen eine erfindungsgemäße Nachrüstvorrichtung 10 in unterschiedlichen Ausgestaltungsweisen. In den Figuren 5 bis 9 sind unterschiedliche Varianten und unterschiedliche Schritte eines erfindungsgemäßen Verfahrens dargestellt, wobei hier schematisch nur eine Übersicht für eine beispielhafte Nachrüstvorrichtung 10 dargestellt ist. Selbstverständlich können auch unterschiedliche Nachrüstvorrichtungen 10 für ein solches beispielhaft dargestelltes Verfahren eingesetzt werden.

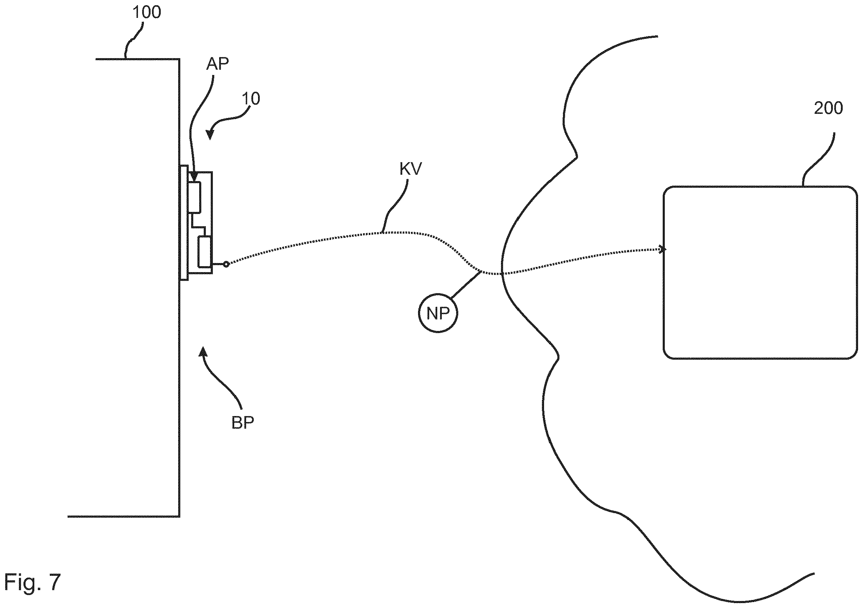

In Figur 1 ist eine besonders einfache Ausgestaltung einer Nachrüstvorrichtung 10 dargestellt. Diese Nachrüstvorrichtung 10 ist mit einem Gehäuse 20, welches insbesondere flüssigkeitsdicht ausgebildet ist, ausgestattet. In dem Gehäuseinnenraum 22 ist ein Nachrüstsensor 40 vorgesehen, welcher hier zum Beispiel als Vibrationssensor ausgebildet sein kann. Mithilfe einer Nachrüst-Befestigungsschnittstelle 30, welche hier zum Beispiel als Klebeschnittstelle oder als Magnetschnittstelle ausgestaltet sein kann, kann das Gehäuse 20 und damit die gesamte Nachrüstvorrichtung 10 in einen befestigenden Kontakt mit einer Außenseite einer Produktionsmaschine 100 gebracht werden, wie dies zum Beispiel in Figur 5 zu erkennen ist. Sobald diese flächige Anordnung und Kontaktierung an der Produktionsmaschine 100 erfolgt ist, kann über die Nachrüst-Sensorschnittstelle 42 nun eine Vibration der Außenseite der Produktionsmaschine 100 auch vom Nachrüstsensor 40 aufgenommen werden. Diese Vibration in diesem Beispiel kann als Nachrüstparameter NP im Inneren der Nachrüstvorrichtung 10 an das Kommunikationsmodul 50 weitergegeben werden. Hier schematisch als Antenne dargestellt ist eine bidirektionale oder unidirektionale Kommunikationsfähigkeit, um den Nachrüstparameter NP, wie dies später zum Beispiel in Figur 7 dargestellt ist, an ein separates Empfangsmodul 200 weiterzukommunizieren.

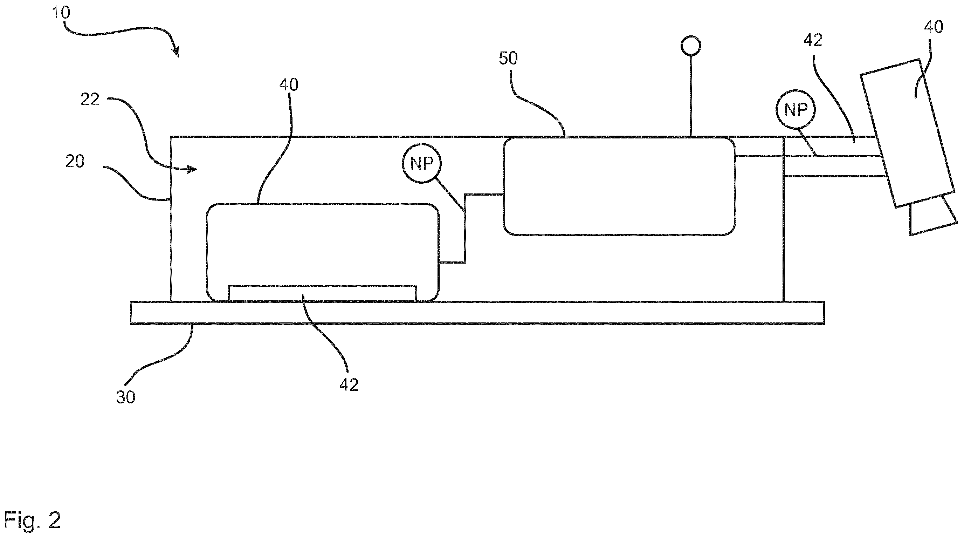

In der Figur 2 ist eine Weiterführung der Figur 1 dargestellt. Hier ist ein zweiter Nachrüstsensor 40 in Form eines optischen Kamerasystems vorgesehen, welcher über eine auf diese Weise ausgestaltete Nachrüst-Sensorschnittstelle 42 nun eine Ausrichtung aufweist, welche das Auslesen von einer Monitordarstellung an der Produktionsmaschine 100 ermöglicht. Hier können nun alternativ oder zusätzlich Nachrüstparameter NP, welche als Übersetzung von Maschinenparametern MP der Produktionsmaschine 100 ausgelesen worden sind, vorgesehen werden, um diese ebenfalls über das Kommunikationsmodul 50 an das Empfangsmodul 200 zu übermitteln.

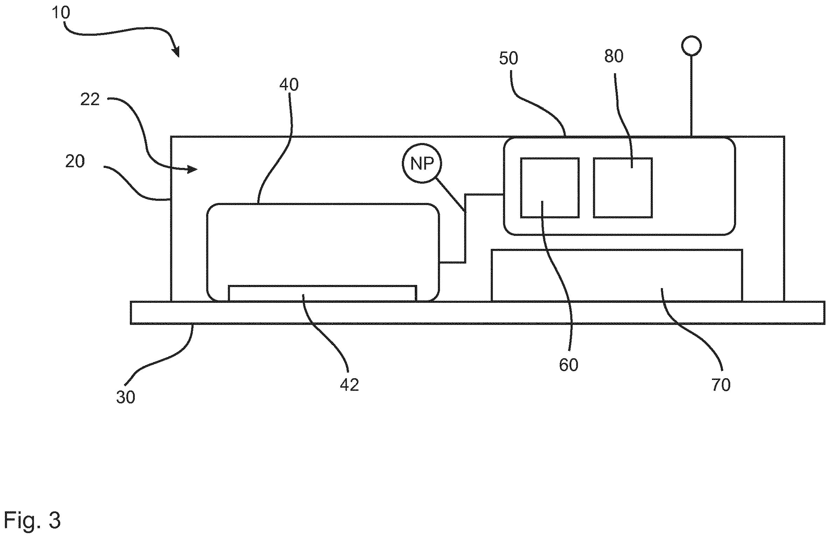

In der Figur 3 ist eine weitere Anreicherung mit zusätzlichen Komponenten zu erkennen. Diese einzelnen Komponenten können jedoch auch einzeln in den einzelnen Ausgestaltungsformen vorgesehen sein. So ist hier eine Batterievorrichtung 70 vorgesehen, welche in der Lage ist, die einzelnen Bauteile im Gehäuseinnenraum 22 mit entsprechender Energie zu versorgen. Auch ist ein Zwischenspeicher 60 zu erkennen, um erfasste Nachrüstparameter NP zwischenzuspeichern, wenn die Stärke der Kommunikation am Kommunikationsmodul 50 nicht ausreicht, um alles vollständig sofort zu übertragen. Auch ist hier beispielhaft eine Auswerteeinheit 80 zu einer Zwischenauswertung oder Vorauswertung der Nachrüstparameter zu erkennen. Hier kann zum Beispiel eine Kombination von unterschiedlichen Nachrüstparametern NP zu einer gemeinsamen Kennzahl als Nachrüstparameter NP erfolgen, welche anschließend mit reduziertem Datenbedarf über das Kommunikationsmodul 50 an das Auswertemodul 200 übermittelt wird.

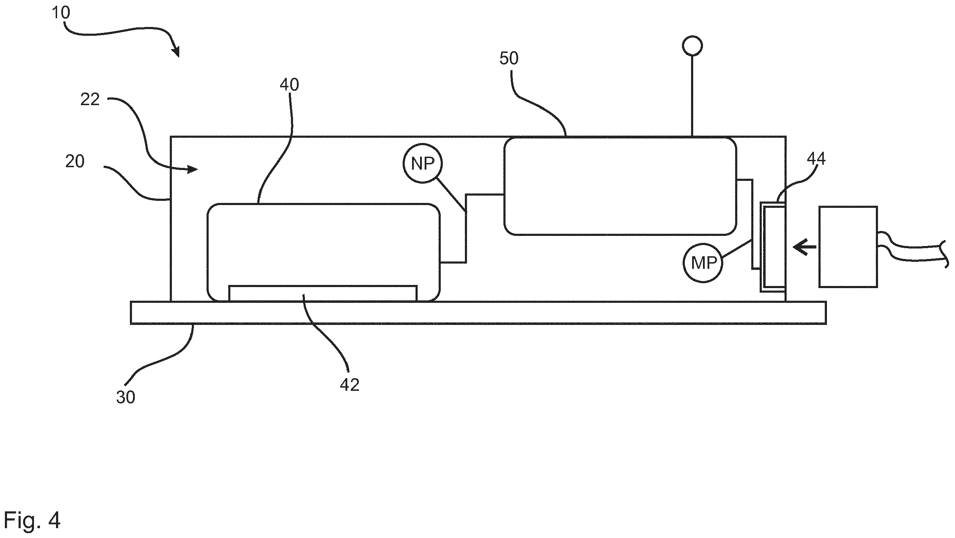

In Figur 4 ist eine Ausgestaltung der Nachrüstvorrichtung mit einer mechanischen Steckverbindung als Nachrüst-Datenschnittstelle 44 dargestellt. Hier können nun explizit und in datentechnischer Form Maschinenparameter MP ausgelesen und in der Nachrüstvorrichtung 10 zur Weitersendung über das Kommunikationsmodul 50 vorgesehen werden.

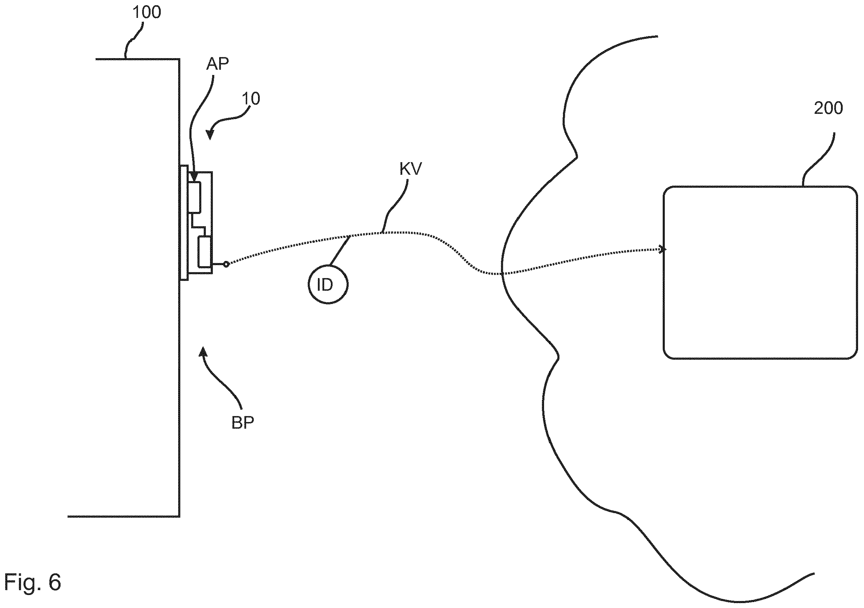

In den Figuren 5 und 6 ist ein Grundzug eines erfindungsgemäßen Verfahrens dargestellt. So wird in einem ersten Schritt die Nachrüstvorrichtung 10 an der Außenseite der Produktionsmaschine 100 angeordnet. Anschließend kann eine Kommunikationsverbindung KV, insbesondere als Funkverbindung, mit dem Empfangsmodul 200 ausgebildet werden, welches die Figur 6 zeigt. In dieser Position befindet sich die Nachrüstvorrichtung 10 in einer Befestigungsposition BP und der entsprechende Nachrüstsensor 40 und die Nachrüst-Sensorschnittstelle 42 in einer Aufnahmeposition AP.

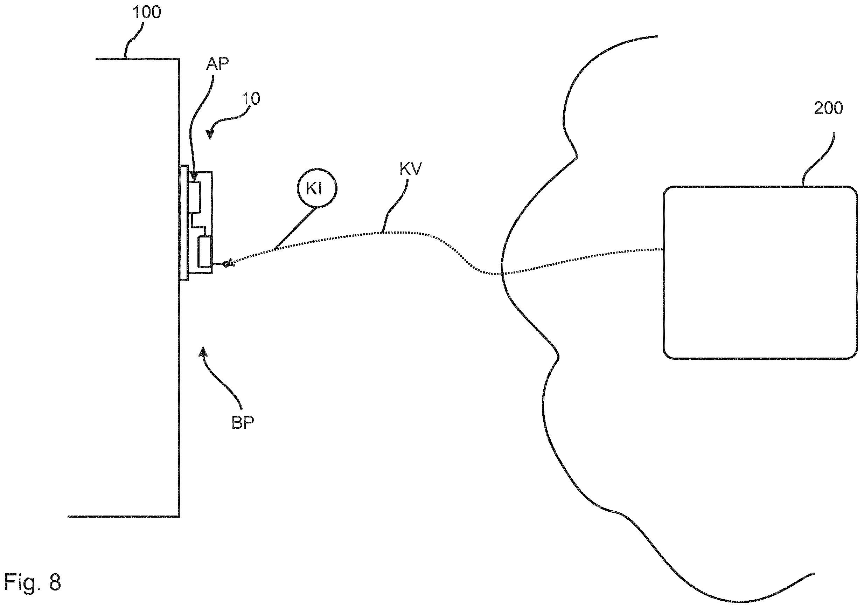

Wie die Figur 6 zeigt, kann in einem ersten Schritt zur Kalibrierung bzw. zentralen Anpassung des Empfangsmoduls 200 eine Identifikation ID der Nachrüstvorrichtung 10 versendet werden. Auf Basis einer solchen Identifikation kann, wie dies zum Beispiel die Figur 8 zeigt, eine Kalibrierinformation KI bidirektional von dem Empfangsmodul 200 an die Nachrüstvorrichtung 10 zurückgesendet werden. Der Standardbetrieb, also das Übermitteln der Nachrüstparameter NP ist in der Figur 7 dargestellt.

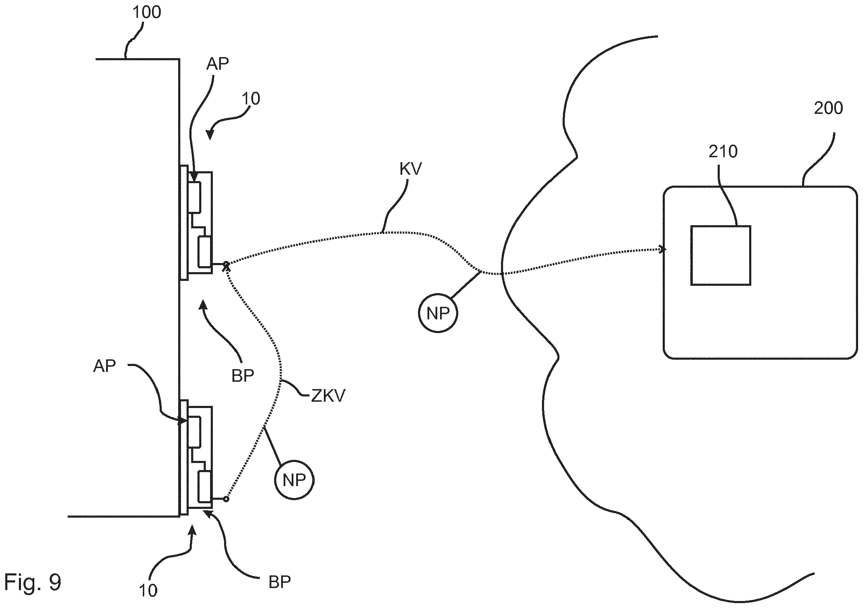

Figur 9 zeigt, wie eine erfindungsgemäße Nachrüstvorrichtung 10 bei einem erfindungsgemäßen Verfahren noch komplexer und flexibler ausgestaltet werden kann. So ist hier eine Produktionsmaschine 100 mit zwei separaten Nachrüstvorrichtungen 10 ausgestattet. Diese können identisch oder unterschiedlich sein. Über eine bidirektionale Kommunikationsmöglichkeit kann nun die untere Nachrüstvorrichtung 10 die eigenen Nachrüstparameter NP an die obere Nachrüstvorrichtung 10 übermitteln. Diese kann nun die eigenen Nachrüstparameter und die empfangenen Nachrüstparameter NP gemeinsam über die Kommunikationsverbindung an das Empfangsmodul 200 übermitteln. Dort ist bei dieser Ausführungsform ein zentrales Auswertemodul 210 vorgesehen, welches in der Lage ist, zentral die gewünschte Auswertung mit der gewünschten Komplexität vornehmen zu können.

Die voranstehende Erläuterung der Ausführungsformen beschreibt die vorliegende Erfindung ausschließlich im Rahmen von Beispielen. Selbstverständlich können einzelne Merkmale der Ausführungsformen, sofern technisch sinnvoll, frei miteinander kombiniert werden, ohne den Rahmen der vorliegenden Erfindung zu verlassen.

### Bezugszeichenliste

- 10: Nachrüstvorrichtung
- 20: Gehäuse
- 22: Gehäuseinnenraum
- 30: Nachrüst-Befestigungsschnittstelle
- 40: Nachrüstsensor
- 42: Nachrüst-Sensorschnittstelle
- 44: Nachrüst-Datenschnittstelle
- 50: Kommunikationsmodul
- 60: Zwischenspeicher
- 70: Batterievorrichtung
- 80: Auswerteeinheit

- 100: Produktionsmaschine
- 200: Empfangsmodul
- 210: zentrales Auswertemodul

- BP: Befestigungsposition
- AP: Aufnahmeposition
- NP: Nachrüstparameter
- MP: Maschinenparameter
- KV: Kommunikationsverbindung
- ZKV: Zwischen-Kommunikationsverbindung
- KI: Kalibrierinformation
- ID: Identifikation

## Patentansprüche

1. Nachrüstvorrichtung (10) für ein Nachrüsten einer Sensorfunktionalität bei einer Produktionsmaschine (100), aufweisend ein Gehäuse (20) mit einem wenigstens teilweise abgeschlossenen Gehäuseinnenraum (22) und eine Nachrüst-Befestigungsschnittstelle (30) für ein nachträgliches Befestigen des Gehäuses (20) an der Produktionsmaschine (100) in einer Befestigungsposition (BP), weiter aufweisend wenigstens einen Nachrüstsensor (40) zum Aufnehmen wenigstens eines Nachrüstparameters (NP) der Produktionsmaschine (100) in der Befestigungsposition (BP), wobei der wenigstens eine Nachrüstsensor (40) eine Nachrüst-Sensorschnittstelle (42) aufweist für eine Anordnung des wenigstens einen Nachrüstsensors (40) in einer Aufnahmeposition (AP) zur Aufnahme des wenigstens einen Nachrüstparameters (NP), wobei weiter ein Kommunikationsmodul (50) vorgesehen ist für eine Übermittelung des wenigstens einen Nachrüstparameters (NP) an ein separates, vom Gehäuse (20) beabstandetes Empfangsmodul (200).

2. Nachrüstvorrichtung (10) nach Anspruch 1, **dadurch gekennzeichnet, dass** der wenigstens eine Nachrüstsensor (40) für die Erfassung wenigstens eines der folgenden Nachrüstparameter (NP) ausgebildet ist:
- Umgebungstemperatur
- Kontakttemperatur
- Vibrationsfrequenz
- Umgebungsdruck
- Luftfeuchtigkeit
- Akustische Signale
- Optische Signale

3. Nachrüstvorrichtung (10) nach einem der vorangegangenen Ansprüche, **dadurch gekennzeichnet, dass** der wenigstens eine Nachrüstsensor (40) im Gehäuseinnenraum (22) oder zumindest teilweise im Gehäuseinnenraum (22) angeordnet ist.

4. Nachrüstvorrichtung (10) nach einem der vorangegangenen Ansprüche, **dadurch gekennzeichnet, dass** das Kommunikationsmodul (50) ausgebildet für eine Übermittlung per Funkübertragung, insbesondere an ein in einem Funknetz angeordnetes Empfangsmodul (200).

5. Nachrüstvorrichtung (10) nach einem der vorangegangenen Ansprüche, **dadurch gekennzeichnet, dass** das Kommunikationsmodul (50) für eine bidirektionale Kommunikation, insbesondere mit Kommunikationsmodulen (50) anderer Nachrüstvorrichtungen (10) ausgebildet ist.

6. Nachrüstvorrichtung (10) nach einem der vorangegangenen Ansprüche, **dadurch gekennzeichnet, dass** eine Nachrüst-Datenschnittstelle (44) für einen direkten Empfang von Maschinenparametern (MP) der Produktionsmaschine (100) vorgesehen ist.

7. Nachrüstvorrichtung (10) nach einem der vorangegangenen Ansprüche, **dadurch gekennzeichnet, dass** die Nachrüst-Befestigungsschnittstelle (30) für ein werkzeugfreies Befestigen an der Produktionsmaschine (100) ausgebildet ist.

8. Nachrüstvorrichtung (10) nach einem der vorangegangenen Ansprüche, **dadurch gekennzeichnet, dass** ein Zwischenspeicher (60) vorgesehen ist für eine Zwischenspeicherung der aufgenommenen Nachrüstparameter (NP) für ein anschließendes Übermitteln an das Empfangsmodul (200).

9. Nachrüstvorrichtung (10) nach einem der vorangegangenen Ansprüche, **dadurch gekennzeichnet, dass** eine Batterievorrichtung (70) vorgesehen ist für eine Versorgung des wenigstens einen Nachrüstsensors (40) und/oder des Kommunikationsmoduls (50) mit elektrischer Energie.

10. Nachrüstvorrichtung (10) nach einem der vorangegangenen Ansprüche, **dadurch gekennzeichnet, dass** der wenigstens eine Nachrüstsensor (40) und/oder das wenigstens eine Kommunikationsmodul (50) auswertefrei ausgebildet sind.

11. Nachrüstvorrichtung (10) nach einem der Ansprüche 1 bis 9, **dadurch gekennzeichnet, dass** eine Auswerteeinheit (80) vorgesehen ist für eine Auswertung und/oder eine Teilauswertung der aufgenommenen Nachrüstparameter (NP).
